# EUROPEAN PATENT SPECIFICATION

(11) **EP 1 792 746 B1**
(45) Date of publication and mention of the grant of the patent: **07.09.2011**
(21) Application number: 06380307.6
(22) Date of filing: 22.11.2006
(51) Int. Cl.: B44C 5/04, B29C 43/02, B29C 33/50, B29C 70/46

(54) **Procedure for making a sheet-like product.**
Verfahren zur Herstellung eines flächenförmigen Produktes
Procédé pour la fabrication d'un produit plat

(30) Priority: 30.11.2005 ES 200502962
(43) Date of publication of application: 06.06.2007
(73) Proprietor: Eramat Composites Plasticos, S.L., 48170 Zamudio (Vizcaya) (ES)
(72) Inventor: Gondra Zubieta, Koldo, 48170 Zamudio (Vizcaya) (ES); Alonso Garcia, Juan Ramon, 48170 Zamudio (Vizcaya) (ES); Gomez Alonso, Jose Luis, 48170 Zamudio (Vizcaya) (ES); Escobal Gonzalo, Javier, 48170 Zamudio (Vizcaya) (ES)
(74) Representative: Carpintero Lopez, Francisco

(56) References cited:
- EP-A- 1 422 039
- EP-A2- 0 491 630
- EP-A2- 1 319 525
- GB-A- 1 098 481

## Description

### TECHNICAL FIELD OF THE INVENTION

The invention is included in the field of the manufacture of sheet-like moulded decorative facings.

### BACKGROUND OF THE INVENTION

A great number of methods for the obtaining of decorative facings imitating walls, partitions, roofs or beams made from traditional materials such as stone, brick, slate, clay or wood are known. In general, said procedures are usually obtained from a mould with at least one surface which is complementary to the surface to be reproduced on the visible side of the facing. Occasionally, a countermould with a surface which is complementary to the desired shape of the hidden side is also used.

A process of this type is disclosed in ES-A-2211262 (corresponding to EP-A-1319525), which relates to a process for the obtaining of facings in an open mould, by a process of manual lamination or discharge onto a model or a silicone mould. This type of process usually purports a series of problems:
- These processes are difficult to automate and they usually involve many tasks which must be executed manually.
- The processes of manufacture in an open mould usually involve considerable emissions of styrene, a volatile organic compound which changes into a gaseous state during the handling and moulding stages. Styrene is a product which is harmful to health and to the environment; for this reason there are several directives aimed towards reducing styrene emissions.
- These processes usually involve an inefficient exploitation of the raw material, as the processes do not permit the obtaining of items with the exact final dimensions; for this reason a subsequent stage of tooling is required, in which part of the material is eliminated; usually a proportion of 2-8% by weight of the material produced, or even more.
- The formulations used in these processes in order to obtain a correct performance against fire (M1/F2, in accordance with the Spanish Standard UNE 23727-1990 -which classifies materials with regard to their performance against fire, from M0 to M4- and the French Standard NFF 16101 -which classifies materials with regard to the density and toxicity of the gases produced by their combustion, from F1 to F5-); that is to say, in order that the products obtained shall be fire-resistant, they are expensive, due to the fact that the inherent characteristics of the processes make it impossible to use high-viscosity formulations, which prevents the use of high percentages of inorganic loads. In consequence, special additives have to be used, which involve additional high costs.

On the other hand, the manufacture of decorative facings based on the compression of a material called SMC ("Sheet Moulding Compound") is known; this compound may be pre-impregnated with one or several products which give the material fire-resistant properties (in accordance with the requirements corresponding to the foreseen application of the facing). SMC is a mouldable finished compound produced with all the components of its formulation (resin, fibre, load, additives, etc.) which is usually produced in the form of a rolled sheet (spool), ready for the application of pressure and temperature.

For the transformation of the SMC material into the corresponding facing, the use of heated metallic moulds, usually of chromed steel, is known, although it is also possible to use moulds of other materials. However, these processes also entail certain problems:
- The moulding, in order to obtain decorative facings of SMC from this type of moulds, requires high pressures, in the region of 30-120 bar.
- These moulds are usually very costly.
- The use of rigid moulds may entail problems at the time of turning out the mould, for example, when the items obtained are of a geometrical shape which implies undercuts. When rigid moulds are used, said geometric shape may require the use of divisible moulds, which increases the cost of the moulds considerably.

EP-A-1422039 discloses a method and apparatus for producing a body having a "structured" surface, that is, a surface that is given a certain configuration in the moulding process. The method is a method of injection moulding.

EP-A-0491630 is a method of vacuum moulding between two flexible mould parts or between one rigid and one flexible mould part.

### DESCRIPTION OF THE INVENTION

The first aspect of the invention relates to a procedure as defined in claim 1, for obtaining a laminar (that is, a sheet-like) product with at least one surface with relief, starting from a mouldable material. The procedure comprises the steps of:
a) placing the mouldable material in a rigid mould;
b) compressing said mouldable material with heat between the mould and a rigid countermould; and
c) removing a product, moulded from a mouldable material, from the mould.

In accordance with the invention, in step a), the mouldable material is placed on a flexible, elastic element laid in the mould. The flexible, elastic element is arranged so that it has one surface in contact with the mouldable material during step b), said surface having a configuration which is complementary to the relief configuration which is it desired to imprint on one surface of the mouldable material. The obtaining of a flexible, elastic element of these characteristics can be simple, and may be achieved in accordance with conventional techniques. Obviously, the flexible element must be of a material which endures the working conditions (for example, in many applications, temperatures in excess of 100°C -for example, in the range between 110 and 140°C-, and pressures in the range of 10 bar) and it must be compatible with the mouldable material so that said mouldable material and the flexible element do not adhere to each other.

The use of this flexible, elastic element, skin, model or imprint represents a series of advantages. For example, the cost of obtaining the mould is reduced, as the flexible, elastic element may feature the relief which it is desired to give to the product; for this reason it is not necessary for the mould to feature said relief.

On the other hand, the pressure by which the mouldable material must be applied to the mould is reduced, probably due to the fact that the flexible, elastic material tends to yield to the passage of the mouldable material, with the result that this material tends to flow better on entering and adapting to the surface with relief. This may be particularly relevant when the mouldable material is a mouldable sheet compound (SMC: "sheet moulding compound"), which is a material with low fluidity. It has been verified that satisfactory results may be obtained with pressures in the region of 10 bar. Namely, the flexibility and elasticity of the flexible, elastic element (for example, a sheet of silicone) allows the material to adapt to the geometry of the mould by means of the application of pressures lower than those necessary for rigid moulds.

Besides, the use of a flexible, elastic element facilitates the step of turning out, that is, the removal of the moulded product from the mould, particularly when the moulded product has undercuts. The flexibility of the flexible, elastic element facilitates this turning out.

Moreover, this procedure implies a low level of styrene emissions.

Furthermore, it has been verified that this procedure allows the obtaining of uniform items with minimum variations in thickness and weight, a feature which allows a reduction in the quantity of material used. A reduction in the turnaround times is also achieved.

The mouldable material is a sheet moulding compound (SMC) , for example, polyester or phenolic (the resin used for the manufacture of SMC may be, for example, polyester or phenolic) and/or fire-resistant prepreg (for example, it may incorporate a high level of inorganic loads, such as hydrated alumina).

The procedure in accordance with the invention has proved to be particularly efficient and effective when the mouldable material is SMC. SMC is a material which usually has low fluidity, a characteristic which complicates the correct feed of material into the mould; for this reason, the material has traditionally had to be applied under high pressure. The use of a flexible, elastic element in accordance with the invention allows a reduction in this pressure. This may be due to the fact that the flexibility of the element causes it to yield partially to the forward movement of the mouldable material, facilitating the passage of said mouldable material.

The flexible, elastic element may be made of silicone. For example, the flexible, elastic element may be a sheet of silicone. It may be expedient to use a silicone of considerable hardness (for example, with a hardness within the range of 50-95 (Shore A)).

The flexible, elastic element may be made of a flexible, elastic material reinforced by a reinforcing structure (for example, a mesh, a woven fabric, or similar).

The mould and/or the countermould may be made, for example, of steel, aluminium, composite or of a suitable rigid material.

The countermould may have an internal surface with a configuration which is complementary to the configuration of the surface of the flexible, elastic element (but, preferably at least, eliminating undercuts).

The procedure may include the step of, prior to step a), placing the flexible, elastic element in the mould.

The procedure may include the step of, prior to step a), applying pigments on the surface of the flexible, elastic element. In this way, the moulded product may be given the desired pigmentation.

Step c) includes the step of separating the countermould from the mould and subsequently separating the moulded product from the flexible, elastic element; this may be simple even in the event that there may be undercuts: here the flexibility of the flexible, elastic element acts as an aid.

In step b), the mould may be at one temperature and the countermould may be at a second temperature, said second temperature being higher than said first temperature. This may be so in order to allow a rapid heating of the mouldable material without heating excessively the flexible, elastic element. If this element is made of, for example, silicone, excessive heating may cause deterioration of the flexible, elastic element.

For example, the first temperature may be between 90 °C and 120 °C, and the second temperature may be between 100 °C and 150 °C. At step b), the flexible, elastic element may, for example, be at a temperature of between 95 °C and 105 °C.

The product may be a decorative facing item; in fact, it is believed that the invention is particularly useful for the obtaining of this type of facings, as it improves greatly the performance in comparison with the known conventional processes.

Another aspect of the disclosure (which is not claimed) relates to a set of equipment for the obtaining of a laminar (that is, a sheet-like) product with at least one surface with reliefs, starting from a mouldable material, the equipment comprising a mould and a countermould configured to mould a product from a mouldable material by means of compression with heat. In accordance with the invention, the equipment also comprises a flexible, elastic element configured to be laid in the mould. The flexible, elastic element has a surface with a configuration complementary to a relief configuration which it is desired to imprint on one surface of the mouldable material. What is mentioned above with regard to the procedure is also applicable to the equipment, *mutatis mutandis.*

The mouldable material is a sheet moulding compound (SMC), as has been mentioned above. The flexible, elastic element may be made of silicone, for example, a sheet of silicone. The flexible, elastic element may be made of a flexible, elastic material reinforced by a reinforcing structure (such as a mesh, a woven fabric, or similar).

The countermould may have an internal surface with a configuration complementary to the configuration of the surface of the flexible, elastic element.

The equipment may be configured in order to heat the mould and the countermould in such a way that the mould may be at one temperature and the countermould may be at a second temperature, said second temperature being higher than said first temperature. For example, said first temperature may be between 90 °C and 120 °C, and said second temperature may be between 100 °C and 150 °C. The equipment may be configured in order to heat the mould in such a way that the flexible, elastic element may be at a temperature of between 95 °C and 105 °C during the moulding process.

Another aspect of the invention relates to a moulded product which has been obtained by means of a procedure in accordance with what is described above, and/or is obtainable by means of said procedure.

### DESCRIPTION OF THE DRAWINGS

In order to supplement the description and with the aim of aiding the better understanding of the characteristics of the invention, in accordance with an example of a preferred practical embodiment of the same, as an integral part of said description, a set of drawings is attached in which, for illustrative and not limitative purposes, the following is shown:

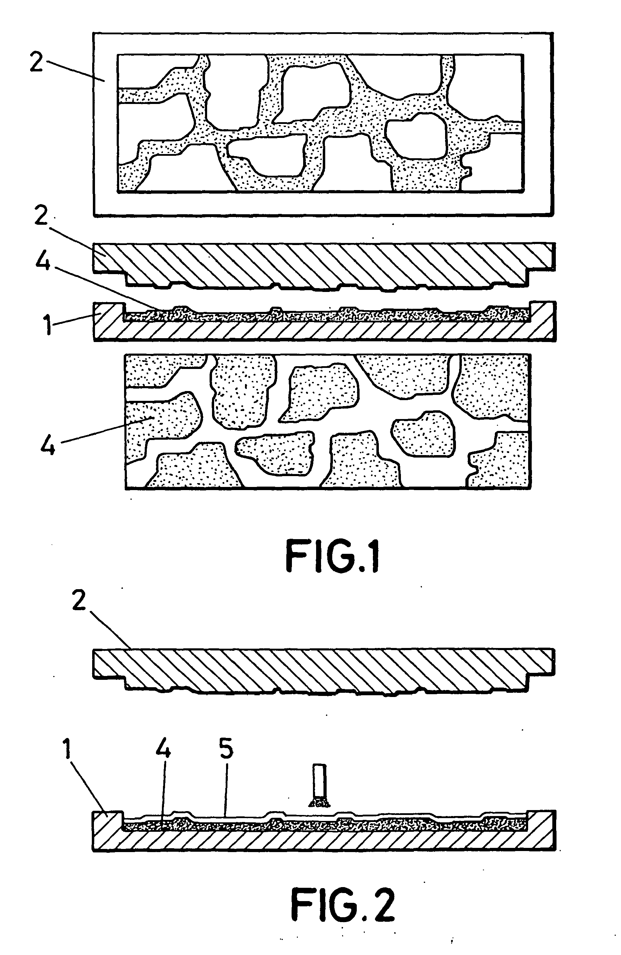

Figures 1-5.- Schematic views of different successive steps of the procedure, and of the equipment used.

### PREFERRED EMBODIMENT OF THE INVENTION

Figure 1 portrays schematically the equipment used, which comprises a mould 1 and a countermould 2 (which may be of chromed steel), likewise a flexible, elastic element 4 which is comprised of a sheet of silicone with a surface which features a relief which it is desired to imprint on the moulded product. As is portrayed schematically in Figure 1, the mould 1 has a smooth internal surface, that is to say, without the relief. The relief is featured on the flexible, elastic element 4 and on the countermould (which features a relief configuration complementary to that of the flexible, elastic element 4).

Figure 2 portrays the application, on the flexible, elastic element 4, arranged in the mould 1, of pigments 5 intended to confer a suitable pigmentation to the product. The pigments may be of the types used habitually in this type of procedures, for example, inorganic pigments based on natural iron oxides, in yellow, brown and black shades.

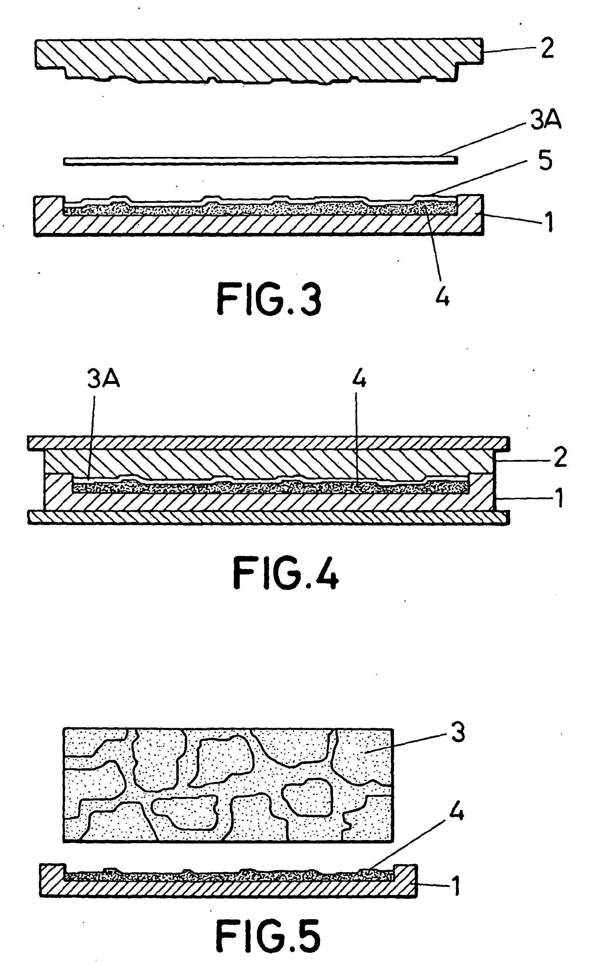

In the next step (Figure 3), the mouldable material 3A, which is comprised of a sheet moulding compound (SMC) of polyester, incorporating inorganic loads which increase its resistance to fire, is placed on the layer of pigments. The mouldable material is obtained by cutting a piece, with dimensions slightly smaller than those of the finished product, from a sheet of SMC.

The mouldable material is compressed (with conventional presses), applying heat (Figure 4), with the mould 1 at a temperature slightly over 100 °C and with the countermould 2 at a somewhat higher temperature (in the region of 120 °C), maintaining the flexible, elastic silicone element at a temperature of approximately 100 °C, in order to avoid deterioration of the same.

Figure 5 portrays how, on completion of the moulding, the product 3 obtained is removed.

With this procedure, very short turnaround times may be achieved (in the region of 5-6 minutes when SMC is used as a raw material), and at the same time pieces are obtained with measurements almost exactly as those desired, which reduces the need for subsequent tooling and the consumption of raw material.

In this preferred embodiment, a high-hardness, tear-resistant silicone is used, such as can be used in high-temperature moulding applications. In order to increase the durability of the flexible, elastic element, a mesh, woven fabric or mat may be incorporated in the silicone.

Satisfactory results have been obtained with a flexible, elastic element of silicone with the following characteristics:
- Viscosity: mPas 130000
- Blended with the curing agent: mPas 90000
- Hardness (Shore A): 59
- Traction resistance: Mpa 4.5
- Elongation-to-break: % 250
- Tear resistance: kN/m 16
- Relative density at 25° C (77°F): 1.29 grams per cubic centimetre
- Linear contraction %: <0.1

Regarding the mouldable material, good results have been obtained using a polyester SMC material, with the following composition:
- Polyester resin 60 parts by weight
- Thermoplastic additive 40 parts by weight
- Moisturising additive 3 parts by weight
- St Zn 4 parts by weight
- Hydrated alumina 250 parts by weight
- Peroxide-type catalyst 1.3 parts by weight
- Decabromine diphenylether 30 parts by weight
- Antimonium trioxide 10 parts by weight

In this text, the word "comprises" and variants of the same (such as "comprising", etc.) should not be interpreted exclusively; that is to say, they do not exclude the possibility that the description may include other elements, steps, etc.

Furthermore, the invention is not limited to the specific embodiments described herein but also encompasses, for example, the variants which may be carried out by the person medium-skilled in the art (for example, regarding the choice of materials, dimensions, components, configuration, etc.), from what may be inferred from the claims.

## Claims

1. Procedure for the obtaining of a sheet-like product, with at least one surface with reliefs, from a mouldable material, said mouldable material being a Sheet Moulding Compound, comprising the steps of:
a) placing the mouldable material (3A) in a rigid mould (1);
b) compressing said mouldable material (3A) with heat between the mould (1) and a rigid countermould (2); and
c) removing a moulded product (3), made from the mouldable material (3A) from the mould (1);
**characterized in that**
in step a), the mouldable material (3A) is placed on a flexible, elastic element (4) arranged in the mould (1) so that said flexible, elastic element has one surface in contact with the mouldable material (3A) during step b), said surface having a configuration complementary to a relief configuration which it is desired to imprint on one surface of the mouldable material (3A);
and **in that**
step c) comprises separating the countermould (2) from the mould (1) and subsequently separating the moulded product (3) from the flexible, elastic element (4).

2. Procedure according to claim 1, **characterised in that** the flexible, elastic element (4) is made of silicone.

3. Procedure according to claim 1 or 2, **characterised in that** the flexible, elastic element (4) is a sheet of silicone.

4. Procedure according to any of the preceding claims, **characterised in that** the flexible, elastic element is made of a flexible, elastic material reinforced with a reinforcing structure.

5. Procedure according to any of the preceding claims, **characterised in that** the countermould (2) features an internal surface with a configuration complementary to the configuration of the surface of the flexible, elastic element (4).

6. Procedure according to any of the preceding claims, **characterised in that** it comprises the step of, prior to step a), placing the flexible, elastic element (4) in the mould (1).

7. Procedure according to any of the preceding claims, **characterised in that** it comprises the step of, prior to step a), applying pigments (5) on the flexible, elastic element (4).

8. Procedure according to any of the preceding claims, **characterised in that** in step b), the mould is at one first temperature and the countermould (2) is at a second temperature, said second temperature being higher than said first temperature.

9. Procedure according to claim 8, **characterised in that** said first temperature is between 90 °C and 120 °C, and said second temperature is between 100 °C and 150 °C.

10. Procedure according to any of the preceding claims, **characterised in that** in step b), the flexible, elastic element (4) is at a temperature of between 95 °C and 105 °C.

11. Procedure according to any of the preceding claims, **characterised in that** the product (3) is a piece of decorative facing.

## Patentansprüche

1. Verfahren zum Erhalten eines scheibenartigen Erzeugnisses mit wenigstens einer Oberfläche mit Reliefs aus einem formbaren Material, wobei das formbare Material ein Sheet Moulding Compound ist, umfassend die Schritte:
a) Anordnen des formbaren Materials (3A) in einer festen Form (1),
b) Pressen des formbaren Materials (3A) unter Hitze zwischen der Form (1) und einer festen Gegenform (2) und
c) Entfernen eines geformten Erzeugnisses (3), das aus dem formbaren Material (3) in der Form (1) erzeugt wurde,
**dadurch gekennzeichnet, dass**
in Schritt a) das formbare Material (3A) auf einem in der Form angeordneten flexiblen, elastischen Element (4) angeordnet ist, so dass das flexible, elastische Element während Schritt b) eine mit dem formbaren Material (3A) in Kontakt stehende Oberfläche aufweist, wobei die Oberfläche eine komplementäre Struktur zu einer Reliefstruktur, welche in eine Oberfläche des formbaren Materials (3A) eingeprägt werden soll, aufweist
und dadurch, dass
Schritt c) das Trennen der Gegenform (2) von der Form (1) und das nachfolgende Trennen des geformten Erzeugnisses (3) von dem flexiblen, elastischen Element (4) umfasst.

2. Verfahren nach Anspruch 1, **dadurch gekennzeichnet, dass** das flexible, elastische Element (4) aus Silikon erzeugt ist.

3. Verfahren nach Anspruch 1 oder 2, **dadurch gekennzeichnet, dass** das flexible, elastische Element (4) ein Silikonblatt ist.

4. Verfahren nach einem der vorhergehenden Ansprüche, **dadurch gekennzeichnet, dass** das flexible, elastische Element (4) aus einem mit einer Verstärkungsstruktur verstärkten, flexiblen, elastischen Material erzeugt ist.

5. Verfahren nach einem der vorhergehenden Ansprüche, **dadurch gekennzeichnet, dass** die Gegenform (2) eine innere Oberfläche mit einer zu der Struktur der Oberfläche des flexiblen, elastischen Elements (4) komplementären Struktur aufweist.

6. Verfahren nach einem der vorhergehenden Ansprüche, **dadurch gekennzeichnet, dass** es vor Schritt a) einen Schritt des Anordnens des flexiblen, elastischen Elements (4) in der Form (1) enthält.

7. Verfahren nach einem der vorhergehenden Ansprüche, **dadurch gekennzeichnet, dass** es vor Schritt a) einen Schritt des Auftragens von Pigmenten (5) auf das flexible, elastische Element (4) umfasst.

8. Verfahren nach einem der vorhergehenden Ansprüche, **dadurch gekennzeichnet, dass** in Schritt b) die Form eine erste Temperatur und die Gegenform (2) eine zweite Temperatur aufweist, wobei die zweite Temperatur höher als die erste Temperatur ist.

9. Verfahren nach Anspruch 8, **dadurch gekennzeichnet, dass** die erste Temperatur zwischen 90 °C und 120 ° ist und die zweite Temperatur zwischen 100 °C und 150 °C ist.

10. Verfahren nach einem der vorhergehenden Ansprüche, **dadurch gekennzeichnet, dass** in Schritt b) das flexible, elastische Element (4) eine Temperatur von zwischen 95 °C und 105 °C aufweist.

11. Verfahren nach einem der vorhergehenden Ansprüche, **dadurch gekennzeichnet, dass** das Erzeugnis (3) Teil einer Dekoraußenschicht ist.

## Revendications

1. Procédé pour obtenir un produit en forme de feuille ayant au moins une surface munie de reliefs à partir d'un matériau susceptible d'être moulé, ce matériau susceptible d'être moulé est un composé de moulage en feuille,
procédé comprenant les étapes suivantes :
a) placer le matériau moulable (3A) dans un moule rigide (1),
b) comprimer le matériau moulable (3A), à chaud, entre le moule (1) et un contre-moule rigide (2), et
c) enlever le produit moulé (3) réalisé avec le matériau moulable (3A) du moule (1),
procédé **caractérisé en ce que**
- dans l'étape a), on place le matériau moulable (3A) sur un élément élastique (4) souple, disposé dans le moule (1), de façon que cet élément élastique souple présente une surface en contact avec le matériau moulable (3A) au cours de l'étape b), cette surface ayant une configuration complémentaire à une configuration en relief que l'on souhaite imprimer dans une surface du matériau moulable (3A), et
- l'étape c) consiste à séparer le contre-moule (2) du moule (1) puis à séparer le produit moulé (3) de l'élément élastique souple (4).

2. Procédé selon la revendication 1,
**caractérisé en ce que**
l'élément élastique souple (4) est en silicone.

3. Procédé selon la revendication 1 ou 2,
**caractérisé en ce que**
l'élément élastique souple (4) est une feuille de silicone.

4. Procédé selon l'une quelconque des revendications précédentes,
**caractérisé en ce que**
l'élément élastique souple est réalisé en un matériau élastique souple renforcé par une structure de renforcement.

5. Procédé selon l'une quelconque des revendications précédentes,
**caractérisé en ce que**
le contre-moule (2) présente sur sa surface interne une configuration complémentaire à la configuration de la surface de l'élément élastique souple (4).

6. Procédé selon l'une quelconque des revendications précédentes,
**caractérisé en ce qu'**
il comporte une étape précédant l'étape a) et consistant à placer l'élément élastique souple (4) dans le moule (1).

7. Procédé selon l'une quelconque des revendications précédentes,
**caractérisé en ce qu'**
il comporte avant l'étape a), une étape consistant à appliquer les pigments (5) sur l'élément élastique souple (4).

8. Procédé selon l'une quelconque des revendications précédentes,
**caractérisé en ce que**
dans l'étape b), le moule est à une première température et le contre-moule (2) est à une seconde température, cette seconde température étant supérieure à la première température.

9. Procédé selon la revendication 8,
**caractérisé en ce que**
la première température est comprise entre 90°C et 120°C et la seconde température est comprise entre 100°C et 150°C.

10. Procédé selon l'une quelconque des revendications précédentes,
**caractérisé en ce que**
dans l'étape b), l'élément élastique souple (4) est à une température comprise entre 95°C et 105°C.

11. Procédé selon l'une quelconque des revendications précédentes,
**caractérisé en ce que**
le produit (3) est une pièce de revêtement décoratif.
